Europäisches Patentamt

European Patent Office

Office européen des brevets

(11) Veröffentlichungsnummer: **0 122 360**
**B1**

(12) **EUROPÄISCHE PATENTSCHRIFT**

(45) Veröffentlichungstag der Patentschrift:
**29.10.86**

(21) Anmeldenummer: **83890210.4**

(22) Anmeldetag: **15.11.83**

(51) Int. Cl.⁴: **B 23 K 11/28**

(54) Vorrichtung zum Punktschweissen, insbesondere zum Befestigen von Kleinteilen an einem Werkstück.

(30) Priorität: **01.04.83 AT 1166/83**

(43) Veröffentlichungstag der Anmeldung:
**24.10.84 Patentblatt 84/43**

(45) Bekanntmachung des Hinweises auf die Patenterteilung:
**29.10.86 Patentblatt 86/44**

(84) Benannte Vertragsstaaten:
**BE CH DE FR GB IT LI LU NL SE**

(56) Entgegenhaltungen:
**DE - A - 1 615 128**
**DE - B - 1 019 778**
**FR - A - 851 515**

(73) Patentinhaber: **VOEST-ALPINE Aktiengesellschaft,**
**Muldenstrasse 5, A-4020 Linz (AT)**

(72) Erfinder: **Feichtl, Roland, Dipl.-Ing., Hillerstrasse 14,**
**A-4033 Linz (AT)**
Erfinder: **Deisenhammer, Walter, Pestalozzigasse 9,**
**A-4800 Attnang-Puchheim (AT)**
Erfinder: **Egger, Friedrich, Dr., Luiz-Zueggstrasse 22,**
**A-6020 Innsbruck (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

## Beschreibung

Die Erfindung bezieht sich auf eine Vorrichtung zum Anpunkten von Kleinteilen an einem Werkstück mit einer aus zwei Zangenarmen bestehenden, einen Elektromagneten aufweisenden Schweisszange für einen Manipulator.

Die Schwierigkeiten beim Anpunkten von Kleinteilen an einem Werkstück mit Hilfe einer Schweissmaschine bestehen im allgemeinen darin, die Kleinteile aus einem Speicher zu entnehmen, dem Werkstück lagerichtig zuzuführen und ausgerichtet festzuhalten. Um eine Positionierung der Kleinteile vornehmen zu können, ist ein gesonderter Manipulator erforderlich, der den Aufwand solcher Fertigungsvorrichtungen erheblich vergrössert. Trotz dieses Mehraufwandes können jedoch Kleinteile unter einer bestimmten Abmessung nicht mehr gehandhabt werden, weil die Elektroden der Schweisszange nicht mehr auf die von dem Manipulator gehaltenen Kleinteile aufgesetzt werden können.

Um bei Werkstücken, die nur von einer Seite zugänglich sind, die zu verschweissenden Teile während des Schweissvorganges zusammendrücken zu können, ist es bekannt (DE-B-1019778), am Gehäuse eines Handschweissgerätes einen Elektromagneten anzubringen, der nach dem Aufsetzen des Schweissgerätes die zu verbindenden Teile in der vorbereiteten Lage festhält. Abgesehen davon, dass ein solcher Elektromagnet beim Einsatz von Schweisszangen überflüssig ist, kann dadurch das Problem der Positionierung der zu verbindenden Teile vor dem Schweissvorgang nicht gelöst werden.

Gleiches gilt für eine andere bekannte Konstruktion (FR-A-851515), bei der die Arme einer Schweisszange mit Hilfe von an jedem Zangenarm vorgesehenen Elektromagneten geschlossen werden können, so dass die Elektroden der Schweisszange von entgegengesetzten Seiten gegen die zu verschweissenden Teile gedrückt werden. Da die vorgesehenen Elektromagneten zum Schliessen der Schweisszange dienen, müssen die zu verbindenden Teile bereits vor der Erregung dieser Elektromagneten positioniert sein.

Der Erfindung liegt somit die Aufgabe zugrunde, eine Vorrichtung der eingangs geschilderten Art so zu verbessern, dass Kleinteile auch mit geringen Abmessungen einfach positioniert und an einem Werkstück angepunktet werden können. Die Erfindung löst die gestellte Aufgabe dadurch, dass der entlang der Elektrode des einen Zangenarmes der Schweisszange verschiebbar gelagerte Elektromagnet als Hubmagnet zum Transport der anzupunktenden Kleinteile ausgebildet ist.

Durch das Vorsehen eines Hubmagneten für die anzupunktenden Kleinteile an einem der beiden Arme der Schweisszange wird ein gesonderter Manipulator zum lagerichtigen Zuführen der Kleinteile zum Werkstück unnötig, weil diese vom Hubmagneten gehaltenen Kleinteile mit der von einem Manipulator getragenen Schweisszange selbst positioniert werden können. Der im Bereich einer Elektrode der Schweisszange vorgesehene Hubmagnet bringt darüber hinaus den Vorteil mit sich, dass die anzupunktenden Kleinteile unmittelbar neben der Elektrode gehalten werden können, so dass es möglich wird, Kleinteile, die nur wenig grösser als der Elektrodendurchmesser sind, sicher zu handhaben. Zum Erfassen der Kleinteile werden die Pole des Hubmagneten über die Elektrode vorgeschoben. Zu diesem Zweck ist der Hubmagnet entlang der Elektrode verschiebbar gelagert. Ist der jeweilige Kleinteil erfasst und in die Schweisslage gebracht worden, so wird der Kleinteil vom Hubmagneten solange festgehalten, bis sich die Schweisszange geschlossen hat und der Kleinteil durch die Elektroden der Schweisszange an das Werkstück angedrückt wird. Danach kann der Hubmagnet vom Kleinteil zurückgezogen und der Kleinteil am Werkstück angepunktet werden, ohne dass die Gefahr einer Lageänderung des Kleinteiles gegenüber dem Werkstück gegeben ist.

Damit auch Kleinteile mit vergleichsweise geringen Abmessungen sicher von dem Hubmagneten erfasst werden können, können die Pole des Hubmagneten die Elektrode des einen Zangenarmes der Schweisszange umschliessen. Die zu handhabenden Kleinteile werden bei einer solchen Konstruktion unmittelbar neben der Elektrode gehalten, wobei sich die einfache Möglichkeit ergibt, den Hubmagneten auf der Elektrode selbst verschiebbar zu führen.

Wegen der Steuerung der Erregung des Hubmagneten tritt auch bei der Übernahme der Werkstücke durch die Schweisszange keine Gefahr einer Lageverschiebung auf. Bei schwereren Kleinteilen könnte auch die Schweisszange während der Kleinteilförderung geschlossen werden, um Positionsänderungen während des Transportes auszuschliessen. In einem solchen Fall muss die Schweisszange vor Erreichen des Werkstückes selbstverständlich wieder geöffnet werden.

In der Zeichnung ist der Erfindungsgegenstand beispielsweise dargestellt. Es zeigen

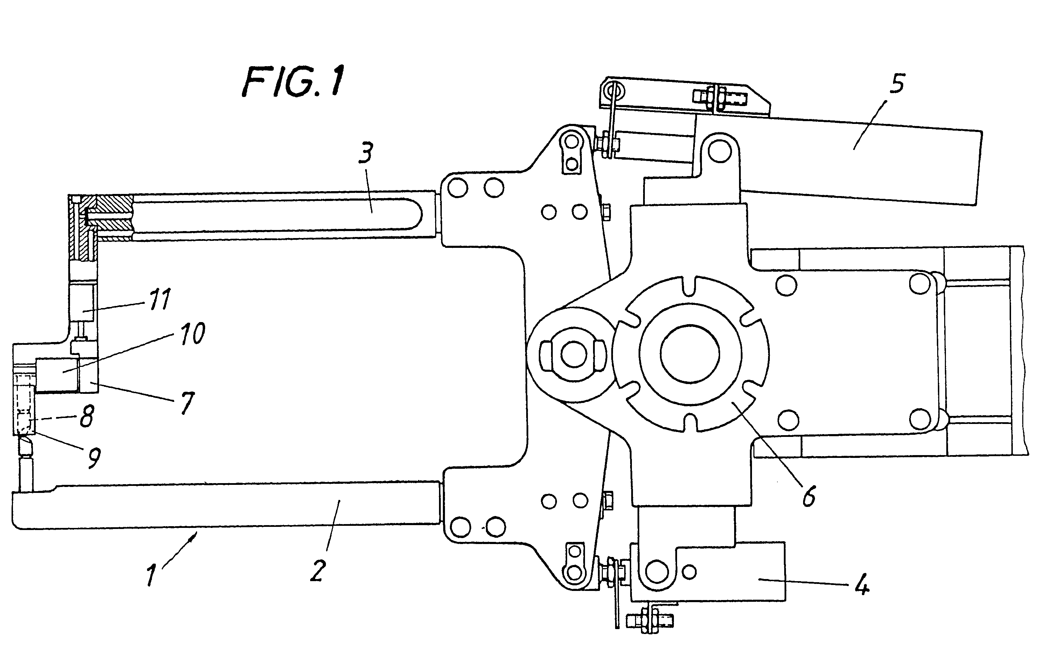

Fig. 1 eine Schweisszange einer erfindungsgemässen Vorrichtung zum Punktschweissen in Seitenansicht und

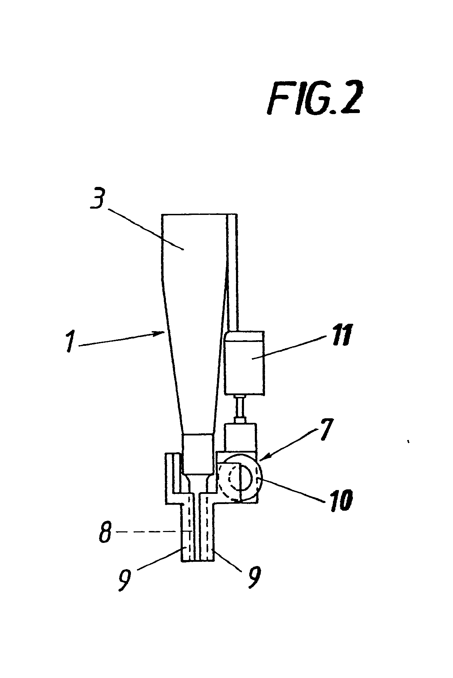

Fig. 2 den den Hubmagneten tragenden Zangenarm dieser Schweisszange in Vorderansicht in einem grösseren Massstab.

Die dargestellte Schweisszange 1 besteht im wesentlichen aus zwei Zangenarmen 2 und 3, die miteinander gelenkig verbunden sind und mit Hilfe von Zylindern 4 und 5 gegeneinander verschwenkt werden können, wobei der Zylinder 5 für die grobe Zangenverstellung und der Zylinder 4 für die Feinverstellung vorgesehen sind. Diese Schweisszange 1 trägt einen Anschlussflansch 6, über den sie an einem Manipulator angeschlossen werden kann, so dass die Schweisszange über den Manipulator beliebig geführt werden kann.

Damit die anzupunktenden Kleinteile mit Hilfe der Schweisszange positioniert werden können, trägt der eine Zangenarm 3 einen elektrischen Hubmagneten 7, der entlang der Elektrode 8 dieses Zangenarmes 3 verschiebbar gelagert ist und dessen Pole 9 die Elektrode 8 umschliessen. Zur Erregung des Hubmagneten 7 dient eine Erregerspule 10, die einen Schenkel des Hubmagneten 7 umschliesst. Die Verschiebung des Hubmagneten 7 entlang der Elektrode 8 der Schweisszange 1 wird mit Hilfe eines Zylinders 11 bewerkstelligt, der auf dem Zangenarm 3 vorgesehen ist.

Wird die Schweisszange 1 mit Hilfe eines nicht dargstellten Manipulators zu einem entsprechenden bereitgelegten Kleinteil geführt, so kann dieser Kleinteil über den vorgeschobenen Hubmagneten 7 so erfasst werden, dass er für die Punktschweissung lagerichtig gegenüber der Elektrode 8 zu liegen kommt. Der erfasste Kleinteil kann folglich mit der Schweisszange zum Werkstück, an dem der Kleinteil angepunktet werden soll, gefördert und gegenüber dem Werkstück ausgerichtet werden, so dass nach einem Schliessen der Schweisszange 1 die Punktschweissung vorgenommen werden kann. Vor der Schweissung kann der Hubmagnet 7 zurückgezogen werden, da der Kleinteil von den Elektroden festgehalten wird.

**Patentansprüche**

1. Vorrichtung zum Anpunkten von Kleinteilen an einem Werkstück mit einer aus zwei Zangenarmen (2, 3) bestehenden, einen Elektromagneten aufweisenden Schweisszange (1) für einen Manipulator, dadurch gekennzeichnet, dass der entlang der Elektrode (8) des einen Zangenarmes (3) der Schweisszange (1) verschiebbar gelagerte Elektromagnet als Hubmagnet (7) zum Transport der anzupunktenden Kleinteile ausgebildet ist.

2. Vorrichtung nach Anspruch 1, dadurch gekennzeichnet, dass die Pole (9) des Hubmagneten (7) die Elektrode (8) des einen Zangenarmes (3) der Schweisszange (1) umschliessen.

**Claims**

1. Apparatus for spot-welding small parts to a workpiece, comprising welding tongs (1) for a manipulator, which welding tongs consist of two tong arms (2, 3) and comprise an electromagnet, characterized in that the electromagnet is mounted to be displaceable along the electrode (8) of one tong arm (3) of the welding tongs (1) and consists of a lifting magnet (7) for transporting the small parts to be spot-welded.

2. Apparatus according to claim 1, characterized in that the poles (9) of the lifting magnet (7) surround the electrode (8) of the one tong arm (3) of the welding tong (1).

**Revendications**

1. Dispositif pour agrafer par points de petites pièces sur une pièce d'usinage, comportant une pince à souder (1) se composant de deux bras (2, 3) de pince et présentant un électro-aimant pour un manipulateur, caractérisé par le fait que l'électro-aimant, qui est monté de manière à pouvoir être déplacé le long de l'électrode (8) de l'un des bras (3) de la pince à souder (1), est réalisé sous la forme d'un aimant (7) de levage servant à transporter les petites pièces devant être agrafées par points de soudure.

2. Dispositif selon la revendication 1, caractérisé par le fait que les pôles (9) de l'aimant (7) de levage embrassent l'électrode (8) de l'un des bras (3) de la pince à souder (1).

FIG.1

# FIG.2